# EUROPÄISCHE PATENTSCHRIFT

(11) **EP 2 910 766 B1**
(45) Veröffentlichungstag und Bekanntmachung des Hinweises auf die Patenterteilung: **02.11.2016**
(21) Anmeldenummer: 15153293.4
(22) Anmeldetag: 30.01.2015
(51) Int. Cl.: F02M 21/06

(54) **Einrichtung zur Verdampfung von tiefsiedenden, verflüssigten Gasen**
Device for evaporation of low-boiling liquefied gases
Dispositif d'évaporation de gaz liquides à bas point d'ébullition

(30) Priorität: 25.02.2014 DE 102014102473
(43) Veröffentlichungstag der Anmeldung: 26.08.2015
(73) Patentinhaber: Marine Service GmbH, 20457 Hamburg (DE)
(72) Erfinder: Schmidt-Lüssmann, Jochen, 21244 Buchholz (DE); Müller-Rieck, Jan-Christian, 22159 Hamburg (DE)
(74) Vertreter: Meyer, Ludgerus

(56) Entgegenhaltungen:
- EP-A1- 0 450 906
- EP-A1- 0 550 845
- EP-A2- 1 092 911
- DE-C1- 4 029 260

## Beschreibung

Die Erfindung betrifft eine Einrichtung zur Verdampfung von tiefsiedenden, verflüssigten Gasen nach dem Oberbegriff des Anspruchs 1, insbesondere zur Verwendung in einer Verbrennungsmaschine auf einem Schiff.

Zum Betrieb von Antriebsmaschinen von großen Schiffen, wie Tanker, Containerschiffe etc. werden verstärkt Flüssiggase, insbesondere verflüssigtes Erdgas (LNG), verwendet, das in Tieftemperaturlagertanks auf dem Schiff bei einer Temperatur von unter minus 160 °C transportiert wird und für den Einsatz in der Antriebsmaschine auf eine Temperatur von ca. plus 30 °C aufgewärmt und verdampft werden muss. Ein Flüssiggasantrieb bietet sich insbesondere dann an, wenn das Schiff ohnehin als Gastransportschiff verwendet ist, aber auch dann, wenn bei Fahrten in küstennahen Gewässern hohe Umweltstandards einzuhalten sind. Im küstennahen Betrieb tritt allerdings das Problem auf, dass das Schiff häufig im Halblastbetrieb oder unter wechselnden Lastbedingungen fährt und damit der Treibstoffbedarf unstetig ist.

Zur Aufheizung und zum Verdampfen des Flüssiggases wird entweder Seewasser oder ein bei tiefer Temperatur flüssig bleibendes Heizmedium, insbesondere eine Glykol-/Wasser-Mischung oder eine andere Alkohol-Wasser-Mischung, eingesetzt, das in einem Zwischenkreislauf das Flüssiggas erwärmt. Seewasser hat den Nachteil, dass es bei der Aufheizung von Flüssiggas leicht zu Einfrierungen kommen kann, wenn die Umwälzung des Wassers ungenügend ist. Außerdem ist die Korrosionsanfälligkeit von Wärmetauschern unter Verwendung von Seewasser sehr groß

Aus der EP1762639A1 ist ein Rohrbündelwärmetauscher bekannt, bei dem eine Vielzahl von vertikal gerichteten Röhren, durch die LNG geleitet wird, von Seewasser im Gegenstrom umspült wird. Diese Druckschrift befasst sich im Wesentlichen mit dem Problem der Korrosionsfestigkeit der verwendeten Röhren.

Ein anderes Beispiel einer derartigen Vorrichtung ist in EP-1092911 gezeigt. In der DE3626359C2 ist ein Verdampfer zum Verdampfen eines Flüssiggasprodukts, wie LNG, angegeben, bei dem ein schraubenförmig um ein Kernrohr gewickeltes Rohr in einem Flüssigkeitsbad angeordnet ist, in das über einen Dampfinjektor Dampf eingeblasen wird. Überschüssiger Dampf bzw. überschüssiges Kondensat wird in einen Flüssigkeitsbehälter zurückgeführt und erneut verdampft. Zwar lässt sich auf diese Weise das Problem mechanischer Spannungen bei raschen Laständerungen etwas verringern, aber zur Erfassung eines großen Lastbereichs müssen mehrere Dampfzuleitungssysteme verwendet werden, die in Abhängigkeit von der Last zu- und abgeschaltet werden müssen. Eine gleichmäßige und an starke Laständerungen angepasste Aufheizung des LNG lässt sich auf diese Weise nur mit erheblichen konstruktiven Aufwendungen erreichen, die häufig fehlerhaft sind und im laufenden Betrieb schwer beherrschbar sind.

Der Erfindung liegt daher die Aufgabe zugrunde, eine Einrichtung zur Verdampfung von tiefsiedenden, verflüssigten Gasen, insbesondere zur Verwendung in einer Verbrennungsmaschine auf einem Schiff, anzugeben, welche einfach aufgebaut ist, mechanisch unempfindlich ist und auch unter stark und schnell wechselnden Lastbedingungen einsetzbar ist.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einer Einrichtung der im Oberbegriff des Anspruchs 1 angegebenen Art, bei der die Aufheizung des Gases mittels eines in einem Zwischenkreislauf geführten Heizmediums, insbesondere einer Glykol-Wassermischung, erfolgt, das seinerseits über einen zweiten Wärmetauscher mit einem weiteren Heizmedium beheizt wird.

Erfindungsgemäß ist der erste Wärmetauscher als Doppelrohrwärmetauscher ausgebildet, wobei das aufzuheizende Gas durch ein Innenrohr und das Heizmedium durch ein das Innenrohr konzentrisch umgebendes Außenrohr zwischen Innen- und Außenrohr geführt ist. Der Doppelrohrwärmetauscher ist vertikal gerichtet und das Gas und das Heizmedium werdend gleichlaufend durch den ersten Wärmetauscher hindurchgeführt.

Die gleichgerichtete Strömungsrichtung von Gas und Heizmedium verringert das Risiko der Eiskristallbildung im Heizmedium, da es an der kältesten Stelle des Verdampfer-Rohrs seine höchste Temperatur hat. Die vertikale Bauform vermeidet Schichten- Wellen- und Schwallströmungen. Auch im Siedebereich der Rohrwandungen findet ein vollständiges Benetzen statt, wodurch sich ein optimaler Wärmeaustausch auch im Siedebereich ergibt.

Vorzugsweise erweitert sich der Durchmesser des Innenrohres zur Durchleitung des Gases von einem ersten unteren Durchmesser zu einem zweiten größeren oberen Durchmesser, wobei das Gas am unteren Ende des Innenrohres in den Wärmetauscher eingeleitet wird. Der Durchmesser des Außenrohres folgt vorzugsweise mit gleichbleibendem Abstand dem Verlauf des Innenrohres. Hierdurch wird erreicht, dass bei geeigneter Bemessung des Grads der Durchmesserzunahme die Strömungsgeschwindigkeit im Innenrohr während des Siedevorgangs im Wesentlichen unverändert bleibt.

Der Eintritt des Gases in das untere Ende des ersten Wärmetauschers erfolgt aufgrund des dort vorhandenen relativ kleinen Rohrdurchmessers mit kleinem Volumen des Flüssiggases. Bei großen Laständerungen und einer Druckerhöhung in der Brennstoffleitung am Ausgang der erfindungsgemäßen Einrichtung wird das im Innenrohr vorhandene Flüssiggas aus dem ersten Wärmetauscher zurückgedrückt, wobei aufgrund des relativ kleinen Volumens der Flüssigphase bei schnellen Lastwechseln, wie z. B. bei schnellen Stoppmanövern des Schiffes, keine Nachverdampfung mehr auftritt.

Innen- und Außenrohr können in gestufter Bauweise mit zylindrischen Segmenten und dazwischen angeordneten konischen Segmenten hergestellt sein. Damit wird die Strömungsgeschwindigkeit des Heizmediums in den zylindrischen Segmenten konstant gehalten und ein guter Wärmeübergang sichergestellt.

Außen- und Innenrohr sind vorzugsweise über mehrere Abstandshalter entlang der Länge des Wärmetauschers auf Abstand gegeneinander gehalten. Diese Abstandshalter können gleichzeitig als Leitbleche ausgebildet sein, um eine Drallströmung des Heizmediums zu erreichen, wodurch ein verbesserter Wärmeübergang erreichbar ist.

Die erfindungsgemäße Einrichtung enthält vorzugsweise auch einen Nachwärmer, über den das den ersten Wärmetauscher verlassende Flüssiggas weiter erwärmt wird. Der Nachwärmer wird ebenso über ein Heizmedium, wie ein Glykol-/Wassergemisch, beheizt, das vorzugsweise ebenso wie im ersten Wärmetauscher im Gleichlauf mit dem aufzuheizenden Gas durch den Nachwärmer strömt.

Der Nachwärmer ist insbesondere als U-förmiger Doppelrohrwärmetauscher mit vertikalem, zylindrischem und konzentrischem Verlauf von Außen- und Innenrohr ausgebildet.

Es ist dabei bevorzugt, das gleiche Heizmedium sowohl für den ersten Wärmetauscher als auch für den Nachwärmer zu verwenden, wobei es zunächst dem Nachwärmer zugeführt wird, in dem es im Gleichlauf das den ersten Wärmetauscher verlassende Gas nacherwärmt. Dann wird das Heizmedium dem unteren Ende des ersten Wärmetauschers zuführt, in dem es das vom Flüssiggastank zugeführte Flüssiggas im Gleichlauf erwärmt.

Es kann vorgesehen sein, in der Verbindungsleitung zwischen erstem Wärmetauscher und Nachwärmer einen Anschluss zur Zufuhr von Boil-Off Gas aus dem Flüssiggaslagertank vorzusehen, um bereits gasförmig vorliegendes Flüssiggas unmittelbar verwerten zu können, ohne dass dies Rückwirkungen auf den Verdampfungsprozess im ersten Wärmetauscher hat.

Zur Vermeidung oder Reduzierung thermischer Spannungen im Außenrohr des ersten Wärmetauschers kann an dessen unterem Ende ein Längenkompensator, beispielsweise ein Wellrohrabschnitt eingesetzt sein. Außerdem dienen auch die konischen Rohrsegmente im Verlauf von Innen- und Außenrohr des ersten Wärmetauschers dazu, thermische Spannungen zu reduzieren. Im Nachwärmerohr dient insbesondere die Ausbildung als U-förmiges Rohr dazu, thermische Spannungen zu vermeiden. Die Rohrbögen im Zulauf des Nachwärmers und an der unteren Umlenkung helfen dabei, im ersten Wärmetauscher noch nicht verdampfte Flüssigkeitsreste an den Wänden des Nachwärmers nachzuverdampfen.

Der Gleichlauf der Strömung des Flüssiggases und des Heizmediums sowohl im ersten Wärmetauscher als auch im Nachwärmer reduziert die Abhängigkeit der Austrittstemperatur von dem Lastpunkt der zu versorgenden Schiffsmaschine.

Der modulare Aufbau der erfindungsgemäßen Einrichtung erlaubt es, mehrere derartiger Einrichtungen parallel zu schalten. Die Verwendung standardisierter zylindrischer und konischer Rohrsegmente, Rohrbögen und Anschlüsse erlaubt eine einfache Fundamentierung, vereinfachte Wartung und kostengünstige Herstellung.

Die Erfindung nach nachstehend an Hand eines Ausführungsbeispiels näher erläutert. Es zeigen
Fig. 1 eine Prinzip-Ansicht der Erfindung,
Fig. 2 eine perspektivische Ansicht einer Ausführungsform der Erfindung,
Fig. 3 eine Seitenansicht des Gegenstandes der Fig. 2,
Fig. 4 eine Vorderansicht des Gegenstandes der Fig. 2,
Fig. 5 eine Draufsicht des Gegenstandes der Fig. 2,
Fig. 6 eine Schnittansicht eines Doppelrohrwärmetauschers,
Fig. 7 eine Seitenansicht eines Innenrohres,
Fig. 8 eine Seitenansicht eines Außenrohres,
Fig. 9 eine Detailansicht eines konischen Rohrsegments des Innenrohrs

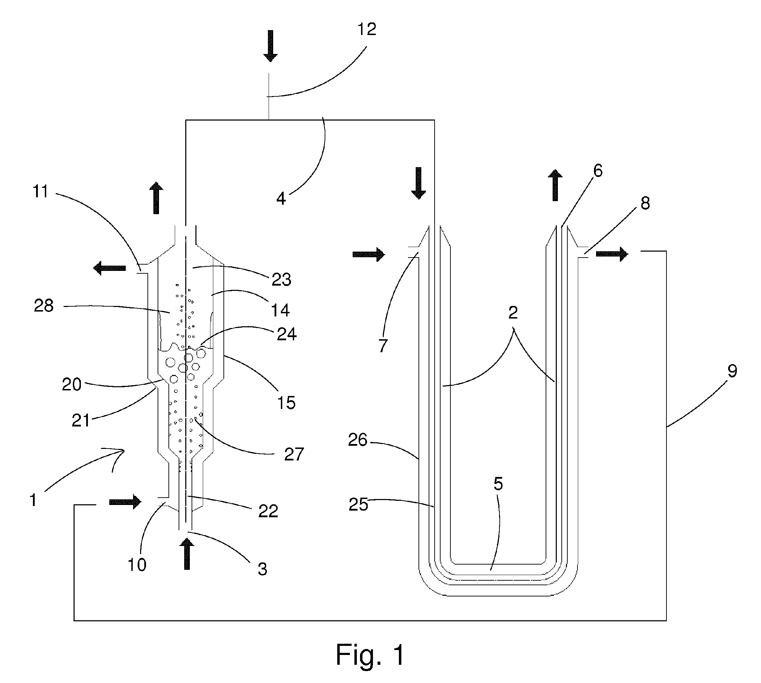

Der in Figur 1 dargestellte Gegenstand der Erfindung enthält einen ersten Wärmetauscher 1, der im Wesentlichen aus einem Innenrohr 14 und einem Außenrohr 15 gebildet ist. Sowohl Innenrohr 14 als auch Außenrohr 15 sind aus mehreren zylindrischen Rohrsegmenten gebildet, die jeweils über konisch verlaufende Rohrsegmente 20 und 21 miteinander verbunden sind. Insgesamt ergibt sich damit für den ersten Wärmetauscher ein gestufter im Wesentlichen sich nach oben konisch erweiternder Doppelrohrwärmetauscher.

Über den unteren LNG-Zulauf 3 wird flüssiges tiefsiedendes Gas 22, wie LNG, in den ersten Wärmetauscher 1 eingeführt. Über den Anschluss 10 wird eine Glykol-/Wasser-Mischung in den Zwischenraum zwischen Innenrohr 14 und Außenrohr 15 eingeführt, welche im Verlauf der Durchströmung des Wärmetauschers das flüssige Gas soweit erwärmt, das es im Bereich 27 zum Blasensieden und im Anschluss an die Übergangszone 24, in der ein Filmsieden stattfindet, zu einem Nebelsieden im Bereich 28 kommt, und danach als dampfförmiges Gas 23 den Wärmetauscher 1 verlässt.

Der Dampf 23 verlässt den ersten Wärmetauscher 1 über einen oberen Rohrbogen 4, der mit einem Anschluss 12 zur optionalen Zufuhr von Boil-Off-Gas versehen ist, und tritt dann von oben in das Innenrohr 25 eines Nachwärmers 2 ein, dem zwischen dessen Außenrohr 26 und Innenrohr 25 über einen Heizmedium-Einlass 7 eine Glykol-/Wasser-Mischung zugeführt wird, die über einen zweiten (nicht dargestellten) Wärmetauscher im Kreislauf in Wärmeaustausch mit einem weiteren Heizmedium,. Insbesondere Seewasser, steht.

Das Heizmedium läuft im Gleichlauf mit dem zu erwärmenden Gas durch den Nachwärmer 2. Das Gas verlässt den Nachwärmer über den Gasablauf 6, während das Heizmedium den Nachwärmer 2 über den Abgang 8 verlässt und über die Leitung 9 zum Anschluss 10 des ersten Wärmetauschers 1 geführt wird, aus dem es am oberen Ende des ersten Wärmetauschers über den Heizmedium-Ablauf 11 abgeführt und zum zweiten (nicht dargestellten Wärmetauscher zurückgeführt wird.

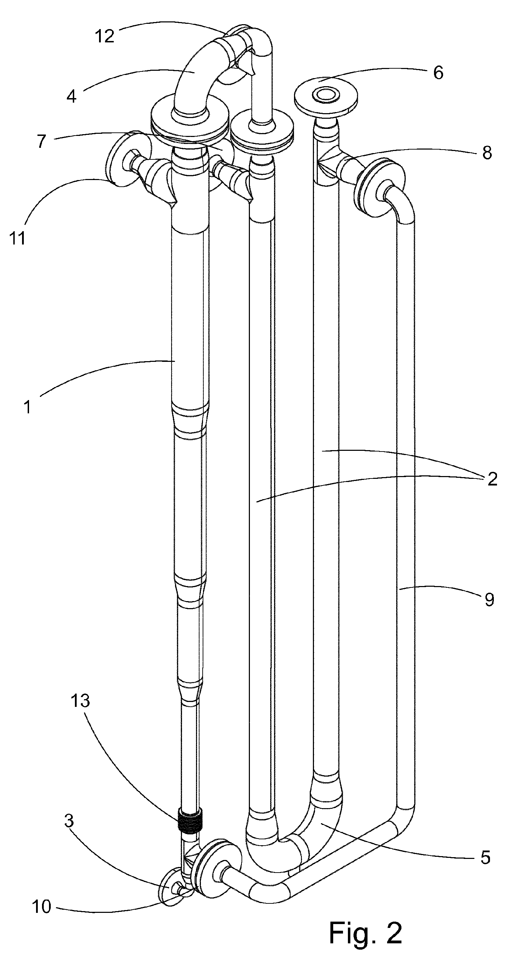

Figur 2 zeigt eine ausgeführte perspektivische Ansicht der Einrichtung nach der Erfindung. Der erste Wärmetauscher 1 ist über den LNG-Zulauf 3 mit einem Lagertank für flüssiges Gas verbunden. Das Gas wird im Wärmetauscher durch das über den Anschluss 10 zugeführte Heizmedium aufgeheizt und läuft dann in gasförmigem Zustand über den Rohrbogen 4 in das obere Ende des U-förmigen Nachwärmers 2 ein, dessen vertikale Schenkel am unteren Ende über den Rohrbogen 5 miteinander verbunden sind. Der Ablauf des verdampften und erwärmten Gases erfolgt über den Gasablauf 6 am Ende des U-förmigen Nachwärmers 2. Das Gas wird vom Gasablauf 6 an eine Schiffsmaschine übergeleitet.

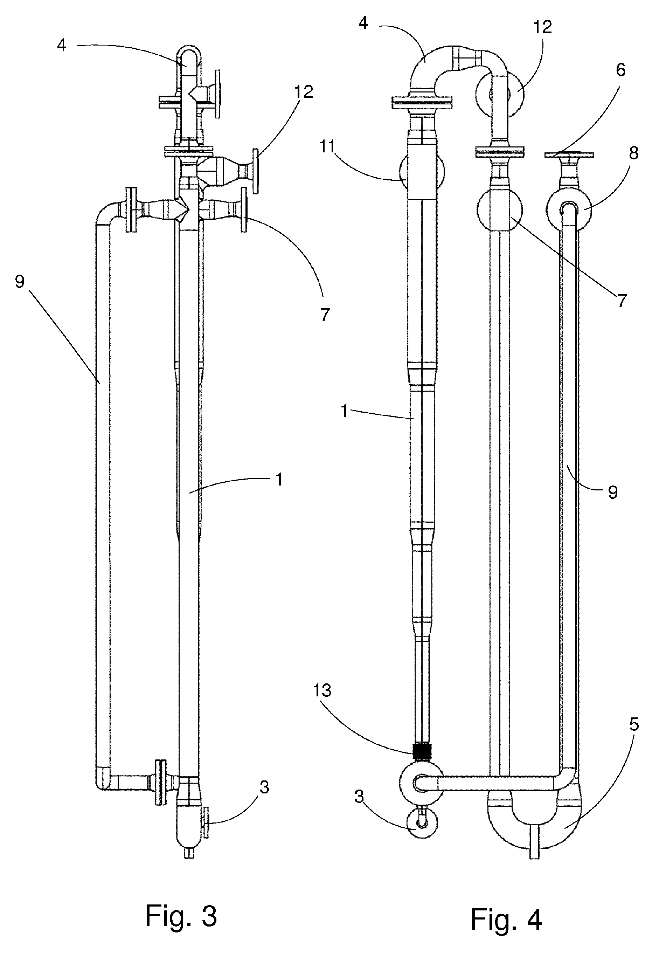

Die Figuren 3, 4 und 5 zeigen zur weiteren Verdeutlichung der erfindungsgemäßen Einrichtung eine Seitenansicht, eine Vorderansicht und eine Draufsicht auf den Gegenstand der Figur 2. Diese Figuren zeigen auch insbesondere den Anschluss 12 für einen Boil-Off-Zugang, über den im Lagertank vorhandenes Boil-Off-Gas unmittelbar in den Bereich der Einrichtung eingeleitet werden kann, in dem das zugeführte Flüssiggas bereits im Wesentlichen verdampft ist.

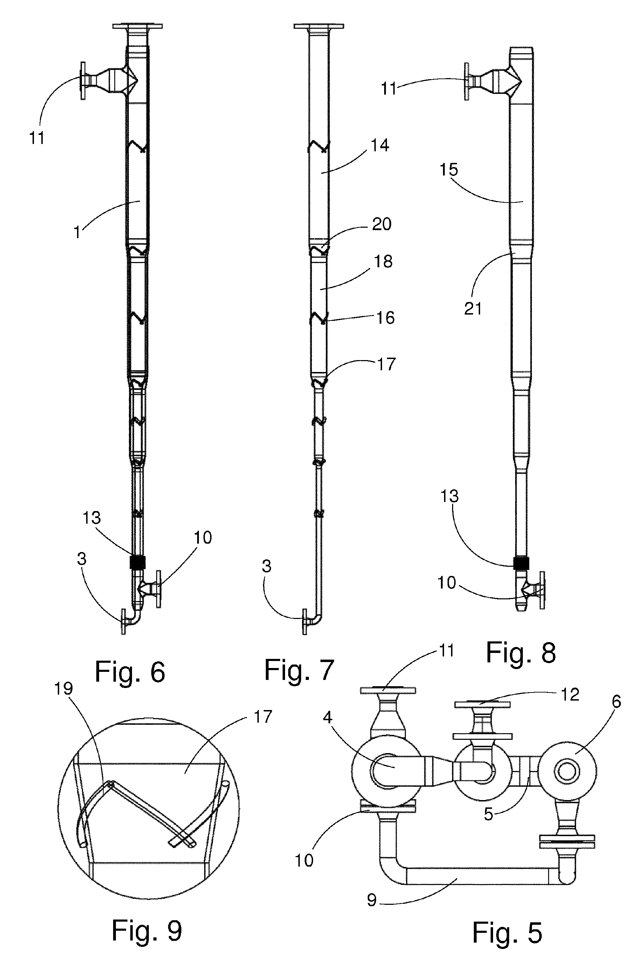

Figur 6 zeigt eine Schnittansicht durch den ersten Wärmetauscher. Dieser weist mehrere, insbesondere vier zylindrische Segmente auf, die über drei konische Segmente miteinander verbunden sind. Zwischen Außen- und Innenrohr befinden sich Abstandshalter zur Einhaltung des Abstandes von Außen- und Innenrohr und zugleich zur Erzeugung einer Drallströmung des Heizmediums.

Figur 7 zeigt das Innenrohr 14 des ersten Wärmetauschers, das aus mehreren zylindrischen Segmenten 18 zu einem Rohrstrang zusammengesetzt ist, wobei die zylindrischen Segmente über konisch verlaufende Segmente 17 bzw. 20 miteinander verschweißt sind. Auf die Außenseite sind mehrere schräg zur Längsachse von der Oberfläche abstehende Abstandshalter 16 und 19 aufgeschweißt, die dafür sorgen, dass Außen- und Innenrohr auch bei thermischen Dehnungen ihren Abstand zueinander einhalten und die gleichzeitig die Heizmedium-Strömung umlenken und verwirbeln, um den Wärmeübergang zum Flüssiggas im Innenrohr zu verbessern.

Figur 8 zeigt das Außenrohr 15, das im unteren Bereich einen Längenkompensator 13 in Form eines Wellrohrabschnitts aufweist, um damit thermische Längenänderungen des Wärmetauschers im Betrieb ausgleichen zu können.

Figur 9 zeigt eine vergrößerte Ansicht eines konischen Segments 17 mit aufgeschweißtem Abstandshalter 19, welcher aus abwechselnd um jeweils etwa 45 ° auf dem Außenumfang des Segments angeordneten Leitblechen besteht, die fest an dem Segment verschweißt sind. Entsprechende Abstandshalter 16 können auch in den zylindrischen Bereichen des ersten Wärmetauschers sowie im Nachwärmer angeordnet sein.

Die erfindungsgemäße Einrichtung lässt sich platzsparend insbesondere im sogenannten Gasaufbereitungsraum eines Schiffes unterbringen. Als Rohrmaterial kommt insbesondere kältefester austhenitischer Stahl (V2A oder V4A) zum Einsatz.

Mit der erfindungsgemäßen Einrichtung lässt sich LNG-Gas, das im Lagertank bei etwa -162 °C gespeichert ist, im ersten Wärmetauscher auf etwa - 40 ° C und im Nachwärmer auf etwa + 30 °C aufheizen. Diese zweistufige Aufheizung verringert thermische Belastungen der verwendeten Materialen erheblich. Die spezifische Gestaltung des ersten Wärmetauschers hilft dabei, Lastwechseln eines Verbrauchers besser als im Stand der Technik begegnen zu können.

### Bezugszeichenliste

- 1: Erster Wärmetauscher
- 2: Nachwärmer
- 3: LNG-Zulauf
- 4: Oberer Bogen
- 5: Unterer Bogen
- 6: Gasablauf
- 7: Heizmedium-Zulauf
- 8: Abgang
- 9: Rohrleitung
- 10: Anschluss
- 11: Heizmedium-Ablauf
- 12: Boil-Off-Gas Zulauf
- 13: Längenkompensator
- 14: Innenrohr
- 15: Außenrohr
- 16: Abstandshalter
- 17: Konisches Segment
- 18: Zylindrisches Segment
- 19: Abstandshalter
- 20: Konisches Innerohrsegment
- 21: Konisches Außenrohrsegment
- 22: Flüssiges LNG
- 23: Dampfförmiges LNG
- 24: Übergangszone
- 25: Innenrohr
- 26: Außenrohr
- 27: Bereich
- 28: Bereich

## Patentansprüche

1. Einrichtung zur Verdampfung von tiefsiedenden verflüssigten Gasen, insbesondere zur Verwendung in einer Verbrennungsmaschine auf einem Schiff, wobei das Gas mittels eines in einem Zwischenkreislauf zirkulierenden Heizmediums, insbesondere in Form eines Glykol/Wasser-Gemisches, über einen ersten Wärmetauscher (1) erwärmt wird, und das Heizmedium seinerseits über einen zweiten Wärmetauscher mit einem weiteren Heizmedium beheizt wird, **dadurch gekennzeichnet,**
- **dass** der erste Wärmetauscher (1) als Doppelrohrwärmetauscher mit einem Innenrohr (14) zur Durchleitung und Erwärmung des Gases und einem Außenrohr (15) zur Durchleitung des Heizmediums ausgebildet ist,
- **dass** Gas und das Heizmedium gleichläufig durch den ersten Wärmetauscher (1) geführt sind,
- **dass** das Innenrohr (14) und das Außenrohr (15) des ersten Wärmetauschers (1) konzentrisch ausgebildet und vertikal gerichtet sind, und
- **dass** der Durchmesser des Innenrohres (14) zur Durchleitung des Gases sich von einem ersten unteren Durchmesser zu einem zweiten größeren oberen Durchmesser erweitert.

2. Einrichtung nach Anspruch 1, **dadurch gekennzeichnet, dass** der Durchmesser des Innenrohres (14) sich stufenweise vom ersten und zweiten Durchmesser erweitert.

3. Einrichtung nach Anspruch 1 oder Anspruch 2, **dadurch gekennzeichnet, dass** der Durchmesser des Außenrohres (15) mit Abstand zum Innenrohr dem Durchmesser des Innenrohres (14) folgt.

4. Einrichtung nach einem der vorhergehenden Ansprüche, **dadurch gekennzeichnet, dass** zwischen Außenrohr (15) und Innenrohr (14) Abstandshalter zur Strömungsumlenkung des Heizmediums eingesetzt sind.

5. Einrichtung nach einem der Ansprüche 2 oder 3, **dadurch gekennzeichnet, dass** die Übergänge zwischen den Durchmesserstufen von Innen- und/oder Außenrohr durch konische Rohrsegmente (20, 21), die zwischen zylindrische Rohrsegmente (18) eingesetzt sind, gebildet sind.

6. Einrichtung nach Anspruch 1, **dadurch gekennzeichnet, dass** dem ersten Wärmetauscher (1) ein Nachwärmer (2) nachgeschaltet ist, über den im ersten Wärmetauscher (1) erwärmtes Gas durch Wärmeaustausch mit einem Heizmedium, insbesondere einem Glykol/Wasser - Gemisch, nacherwärmt wird, bevor das erwärmte Gas der Verbrennungsmaschine zugeführt wird.

7. Einrichtung nach Anspruch 6, **dadurch gekennzeichnet, dass** der Nachwärmer (2) als vertikal gerichteter U-förmig verlaufender Doppelrohrwärmetauscher ausgebildet ist.

8. Einrichtung nach Anspruch 6 oder Anspruch 7, **dadurch gekennzeichnet, dass** das Heizmedium, insbesondere das Glykol/Wasser - Gemisch, nacheinander zunächst durch den Nachwärmer (2) und dann durch den ersten Wärmetauscher (1) jeweils im Gleichlauf mit dem Gas geführt wird.

9. Einrichtung nach einem der Ansprüche 6 - 8, **dadurch gekennzeichnet, dass** die Verbindungsleitung (4) zwischen dem Innenrohr (14) des ersten Wärmetauschers (1) und dem Nachwärmer (2) für das Gas mit einem Anschluss (12) zur Einspeisung von Boil-Off Gas aus einem Gasspeichertank versehen ist.

## Claims

1. Device for evaporating low-boiling liquefied gases, in particular for use in an internal combustion engine on a ship, the gas being heated by a first heat exchanger (1) by means of a heating medium, in particular in the form of a glycol/water mixture, circulating in an intermediate circuit, and the heating medium in turn being heated by a second heat exchanger by means of a further heating medium, **characterised in that**
- the first heat exchanger (1) is designed as a double-pipe heat exchanger having an inner tube (14) through which the gas passes and which heats said gas and an outer tube (15) through which the heating medium passes,
- the gas and the heating medium are guided synchronously through the first heat exchanger (1),
- the inner tube (14) and the outer tube (15) of the first heat exchanger (1) are formed concentrically and oriented vertically, and
- the diameter of the inner tube (14) through which the gas passes widens from a first lower diameter to a second larger upper diameter.

2. Device according to claim 1, **characterised in that** the diameter of the inner tube (14) widens from the first to the second diameter in a stepwise manner.

3. Device according to either claim 1 or claim 2, **characterised in that** the diameter of the outer tube (15) follows the diameter of the inner tube (14) at a distance from the inner tube.

4. Device according to any of the preceding claims, **characterised in that** spacers for deflecting the flow of the heating medium are inserted between the outer tube (15) and the inner tube (14).

5. Device according to either claim 2 or claim 3, **characterised in that** the transitions between the diameter steps of the inner and/or outer tube are formed by conical tube segments (20, 21) that are inserted between cylindrical tube segments (18).

6. Device according to claim 1, **characterised in that** a reheater (2) is arranged downstream of the first heat exchanger (1), by means of which reheater gas heated in the first heat exchanger (1) is reheated by exchanging heat with a heating medium, in particular a glycol/water mixture, before the heated gas is supplied to the internal combustion engine.

7. Device according to claim 6, **characterised in that** the reheater (2) is designed as a vertically oriented, U-shaped double-tube heat exchanger.

8. Device according to either claim 6 or claim 7, **characterised in that** the heating medium, in particular the glycol/water mixture, is guided, in each case synchronously with the gas, first through the reheater (2) and then through the first heat exchanger (1).

9. Device according to any of claims 6 to 8, **characterised in that** the connection line (4) between the inner tube (14) of the first heat exchanger (1) and the reheater (2) for the gas is provided with a connection (12) for feeding in boil-off gas from a gas storage tank.

## Revendications

1. Dispositif pour l'évaporation de gaz liquéfiés à bas point d'ébullition, en particulier à utiliser dans un moteur à combustion interne sur un bateau, le gaz étant chauffé par l'intermédiaire d'un premier échangeur de chaleur (1) à l'aide d'un agent chauffant, en particulier sous la forme d'un mélange glycol/eau, qui circule dans un circuit intermédiaire, et l'agent chauffant étant lui-même chauffé par l'intermédiaire d'un second échangeur de chaleur avec un autre agent chauffant, **caractérisé**
- **en ce que** le premier échangeur de chaleur (1) est conçu comme un échangeur de chaleur à tubes jumelés, avec un tube intérieur (14) pour faire passer et chauffer le gaz, et un tube extérieur (15) pour faire passer l'agent chauffant,
- **en ce que** le gaz et l'agent chauffant traversent l'échangeur de chaleur (1) dans le même sens,
- **en ce que** le tube intérieur (14) et le tube extérieur (15) du premier échangeur de chaleur (1) sont concentriques et sont dirigés à la verticale, et
- **en ce que** le diamètre du tube intérieur (14) pour le passage du gaz augmente d'un premier diamètre en bas jusqu'à un second diamètre en haut, plus grand.

2. Dispositif selon la revendication 1, **caractérisé en ce que** le diamètre du tube intérieur (14) augmente par paliers du premier jusqu'au second diamètre.

3. Dispositif selon la revendication 1 ou 2, **caractérisé en ce que** le diamètre du tube extérieur (15) suit le diamètre du tube intérieur (14) à une certaine distance de celui-ci.

4. Dispositif selon l'une des revendications précédentes, **caractérisé en ce que** des écarteurs destinés à dévier l'écoulement de l'agent chauffant sont placés entre le tube extérieur (15) et le tube intérieur (14).

5. Dispositif selon l'une des revendications 2 ou 3, **caractérisé en ce que** les transitions entre les paliers de diamètre des tubes intérieur et/ou extérieurs sont formées par des segments de tube coniques (20, 21) qui sont placés entre les segments de tube cylindriques (18).

6. Dispositif selon la revendication 1, **caractérisé en ce qu'**il est prévu, en aval du premier échangeur de chaleur (1), un réchauffeur (2) par l'intermédiaire duquel le gaz chauffé dans le premier échangeur de chaleur (1) est réchauffé par un échange de chaleur avec un agent chauffant, en particulier un mélange glycol/eau, avant d'être amené dans le moteur à combustion interne.

7. Dispositif selon la revendication 6, **caractérisé en ce que** le réchauffeur (2) est conçu comme un échangeur de chaleur à tubes jumelés, en forme de U et dirigé à la verticale.

8. Dispositif selon la revendication 6 ou la revendication 7, **caractérisé en ce que** l'agent chauffant, en particulier le mélange glycol/eau, traverse successivement le réchauffeur (2) puis le premier échangeur de chaleur (1), dans le même sens que le gaz.

9. Dispositif selon l'une des revendications 6 à 8, **caractérisé en ce que** la conduite de liaison (4) entre le tube intérieur (14) du premier échangeur de chaleur (1) et le réchauffeur (2) pour le gaz est pourvue d'un raccordement (12) pour l'amenée de gaz d'évaporation à partir d'un réservoir de gaz.
